# FASCICULE DE BREVET EUROPEEN

(11) **EP 2 599 717 B1**
(45) Date de publication et mention de la délivrance du brevet: **19.03.2014**
(21) Numéro de dépôt: 12007642.7
(22) Date de dépôt: 12.11.2012
(51) Int. Cl.: B64C 27/48, B64C 11/26

(54) **Pale de rotor**
Rotorblatt
Rotor blade

(30) Priorité: 01.12.2011 FR 1103664
(43) Date de publication de la demande: 05.06.2013
(73) Titulaire: Airbus Helicopters, 13725 Marignane Cedex (FR)
(72) Inventeur: Bianchi, Laurent, 13012 Marseille (FR); Isidore, Nicolas, 13290 Les Milles (FR)
(74) Mandataire: GPI & Associés

(56) Documents cités:
- GB-A- 1 427 158
- US-A- 3 923 422
- US-A- 4 302 155

## Description

La présente invention concerne une pale de rotor, et notamment une pale de rotor d'un aéronef.

Lors de son mouvement rotatif, une pale de rotor est soumise à un torseur d'efforts et par suite subit un effort centrifuge ainsi que des efforts multiples dus aux mouvements de battement, de traînée et de torsion. La torsion est provoquée notamment par les changements de pas visant à modifier l'inclinaison de la pale par rapport au plan du moyeu soutenant cette pale. Ces efforts génèrent bien sûr des moments de flexion et de torsion.

Les efforts et moments subis par la pale dus en particulier à la force centrifuge et à la torsion doivent alors être transmis au moyeu par la pale.

Les moyens de fixation de la pale au moyeu sont donc soumis à des efforts et des moments susceptibles d'être destructeurs, le terme « effort » désignant par la suite lesdits efforts et moments par raison de simplification. De plus, on comprend qu'il est peut être délicat d'inspecter une pale pour visualiser d'éventuels dommages. En outre, il est avantageux d'optimiser des moyens de fixation pour limiter leurs masses et réduire la traînée aérodynamique qu'ils génèrent en vol.

Le document WO 93/08 017 présente une pale munie d'un sous-ensemble de longeron comportant un élément de retenue en métal et un matériau cellulaire autour duquel sont tressés des fibres.

Le document US 4 302 155 présente une pale munie d'une embase métallique percée en son centre pour accueillir un tube de pilotage. Cette embase inclut une portion cylindrique et une portion en forme de coupe définissant une cavité, une mousse s'étendant à partir de cette cavité.

La mousse et l'embase sont alors couvertes de tissus formant une peau rigide.

Par ailleurs, la pale comprend des colliers de fixation à un moyeu enserrant la peau rigide et l'embase.

Tous les efforts subis par la pale paraissent transiter par l'embase, cette embase étant difficilement visualisable du fait de la présence de la peau rigide.

On connaît aussi le document GB 1 427 158, et le document US 3 923 422.

Le document GB 1 427 158 présente une pale coopérant avec une ferrure de fixation à un moyeu. La ferrure inclut deux joues et une ouverture.

La présente invention a alors notamment pour objet de proposer une pale dont la zone de liaison à un moyeu présente éventuellement une résistance optimisée tout en permettant une inspection visuelle à des fins de maintenance.

Selon l'invention, une pale est munie d'une ferrure de fixation à un moyeu et d'un élément aérodynamique, l'élément aérodynamique ayant un longeron principal s'étendant longitudinalement en envergure d'une zone d'attache vers une zone distale. La zone d'attache du longeron principal entoure une douille de transmission des efforts centrifuges liée à la ferrure.

Cette pale comporte de plus un organe de transmission des efforts de torsion pourvu d'une première demi-coquille et d'une deuxième demi-coquille enserrant conjointement la zone d'attache. Chaque demi-coquille comprend une première partie coopérant avec la douille et une deuxième partie coopérant avec un caisson de torsion de la pale entourant la zone distale du longeron principal, la première partie étant insérée dans la ferrure de manière réversible.

Cette pale est notamment remarquable en ce que la ferrure comprend un évidement annulaire définissant un premier évidement et un deuxième évidement qui sont séparés par un séparateur supérieur et un séparateur inférieur. Chaque séparateur obture donc localement l'évidement annulaire pour partager l'évidement annulaire en un premier évidement et un deuxième évidement.

Le premier évidement et le deuxième évidement sont donc disposés dans un même plan transversal. De plus, le premier évidement et le deuxième évidement décrivent éventuellement un arc de cercle.

La pale comporte alors une première couronne et une deuxième couronne qui sont agencées de manière réversible respectivement dans le premier évidement et dans le deuxième évidement, chaque couronne étant fixée au séparateur supérieur et au séparateur inférieur, une couronne comprenant un axe de fixation qui traverse la douille et la ferrure, cet axe de fixation coopérant avec l'autre couronne.

L'élément aérodynamique comporte donc un caisson pouvant être qualifié de « caisson central » muni d'une part d'un longeron principal apte à notamment transmettre à un moyeu des efforts centrifuges subis par la pale en fonctionnement, et d'autre part d'un caisson de torsion apte à notamment transmettre à un moyeu des efforts de torsion subis par la pale en fonctionnement.

Ainsi, lorsque la pale est fixée à un moyeu par sa ferrure de fixation, les efforts subis par l'élément aérodynamique de la pale durant la rotation du moyeu sont transmis à la ferrure de fixation de cette pale, cette ferrure transmettant lesdits efforts au moyeu.

Plus précisément, les efforts centrifuges sont transmis à la ferrure via la douille enserrée par le longeron principal alors que les efforts de torsion sont transmis à la ferrure via l'organe de transmission coopérant avec le caisson de torsion. Les couronnes peuvent par exemple bloquer les demi-coquilles en rotation par rapport à la ferrure pour permettre le cheminement des efforts de torsion de l'élément aérodynamique vers la ferrure.

Ainsi, l'organe de transmission étant distinct de la douille, la pale possède un cheminement d'efforts centrifuges distinct d'un cheminement d'efforts de torsion à des fins de tolérance aux dommages optimisée.

De plus, les différents cheminements sont visualisables aisément à des fins de maintenance, l'élément aérodynamique pouvant être retiré de la ferrure pour permettre la visualisation de la douille et de l'organe de transmission. Les zones de concentration des efforts susceptibles d'être détériorées lors de la fabrication et de l'utilisation de la pale sont donc aisément accessibles pour pouvoir être inspectées.

Au moins une demi-coquille peut d'ailleurs comprendre au moins une ouverture permettant la visualisation du longeron principal en dehors de la ferrure.

Enfin, la pale a une compacité élevée induisant une traînée aérodynamique optimisée en vol.

Cette pale peut comprendre une ou plusieurs des caractéristiques additionnelles qui suivent

Selon un premier mode de réalisation, la première couronne peut comporter un premier axe de fixation, la deuxième couronne étant pourvue d'un deuxième axe de fixation apte à pénétrer dans ledit premier axe de fixation.

Ainsi, Le premier axe de fixation est inséré dans la douille de l'élément aérodynamique, le deuxième axe de fixation étant inséré dans le premier axe de fixation.

La douille coopère alors avec le premier axe de fixation, ce premier axe de fixation coopérant avec le deuxième axe de fixation.

Les efforts centrifuges exercés sur la pale sont notamment transmis à la ferrure via la douille et les axes de fixation des couronnes.

Selon un deuxième mode de réalisation, la première couronne peut comporter un premier axe de fixation, la deuxième couronne étant pourvue d'un perçage apte à accueillir ce premier axe de fixation.

Les efforts centrifuges exercés sur la pale sont alors notamment transmis à la ferrure via la douille et le premier axe de fixation des couronnes.

Indépendamment du mode de réalisation, chaque couronne peut comporter une portion centrale conformée à la première partie de l'organe de transmission de manière à l'entourer partiellement.

On comprend que l'on entend par « première partie de l'organe de transmission », la section de l'organe de transmission incluant les premières parties des demi-coquilles.

Dans le cadre du premier mode de réalisation, chaque portion centrale porte un axe de fixation pénétrant dans la douille de l'élément aérodynamique.

Par contre, dans le cadre du deuxième mode de réalisation, une portion centrale porte un axe de fixation. L'autre portion centrale comprend alors un perçage dans lequel ledit axe de fixation pénètre après avoir traversé ladite douille.

Selon une variante préférée des premier et deuxième modes de réalisation, la ferrure peut comporter au moins une rainure de guidage coopérant avec un ergot d'une coquille. Au moins une couronne comporte alors une saillie apte à obturer la rainure de guidage pour en assurer l'étanchéité.

L'insertion de la première partie de l'organe de transmission des efforts de torsion dans la ferrure est réalisée de manière précise, chaque ergot de la première partie étant guidé par une rainure de guidage.

De plus, pour éviter que des éléments extérieurs pénètrent indument dans la ferrure par une rainure de guidage, au moins une couronne comporte une saillie obturant cette rainure de guidage.

De plus, chaque rainure de guidage peut déboucher sur une glissière en arc de cercle contenue dans un premier plan parallèle à un deuxième plan contenant les premier et deuxième évidements.

Ainsi, la pale comporte un système de fixation pouvant être qualifié de « système à baïonnette ».

En effet, pour fixer l'élément aérodynamique à la ferrure, on pousse la première partie de l'organe de transmission dans la ferrure en faisant glisser chaque ergot dans une rainure de guidage. A l'issue de cette translation, on fait effectuer une rotation à l'élément aérodynamique afin que chaque ergot se déplace dans une glissière vers une position dite position verrouillée.

Chaque glissière peut comporter un logement axial en regard d'un ergot lorsque l'organe de transmission est verrouillé à la ferrure, pour bloquer un ergot axialement et en rotation dans un logement axial en cas de translation accidentelle de l'organe de transmission par rapport à la ferrure.

Par ailleurs, au moins une première partie des demi-coquilles comprenant un premier méplat, au moins une couronne comporte un deuxième méplat complémentaire au premier méplat. Chaque deuxième méplat peut être réalisé sur portion centrale d'une couronne en regard de la première partie et conformée à cette première partie.

La coopération du premier méplat et du deuxième méplat empêche alors une rotation de la première partie par rapport à la deuxième partie.

Ainsi, la pale peut comporter :
- un moyen d'immobilisation en translation pour immobiliser la ferrure par rapport à l'organe de transmission en translation, tel qu'au moins un ergot coopérant avec une glissière, et / ou
- un moyen d'immobilisation en rotation pour immobiliser la ferrure par rapport à l'organe de transmission en rotation, tel qu'un premier méplat de la première partie coopérant avec un deuxième méplat d'au moins une couronne.

Le moyen d'immobilisation en rotation peut aussi comprendre une clavette ou tout autre système d'arrêt en rotation connu.

De plus, chaque couronne s'étendant d'une première extrémité vers une deuxième extrémité, la pale peut posséder un premier axe de solidarisation solidarisant la première extrémité de la première couronne à la première extrémité de la deuxième couronne et au séparateur supérieur, la pale possédant un deuxième axe de solidarisation solidarisant la deuxième extrémité de la première couronne à la deuxième extrémité de la deuxième couronne et au séparateur inférieur.

Chaque couronne peut alors comprendre une portion centrale en regard de la douille, au moins une portion centrale portant un axe de fixation. La portion centrale est alors prolongée par une première extrémité et une deuxième extrémité en regard chacune d'un séparateur.

Chaque extrémité peut comprendre une surface plane, chaque séparateur étant ainsi enserré entre deux surfaces planes.

Selon un autre aspect, chaque demi-coquille peut comporter un oeillet apte à enserrer une première portion extrémale de la douille, chaque demi-coquille ayant un trou oblong de visualisation.

Il est alors aisé d'agencer les demi-coquilles sur le longeron principal.

De façon alternative, chaque demi-coquille peut comporter un oeillet apte à enserrer une portion extrémale de la douille et une zone conformée à la forme de l'oeillet de l'autre demi-coquille.

Par ailleurs, l'invention peut être appliquée à une pale munie d'une pluralité de longerons.

Ainsi, la pale comportant un longeron secondaire avant et un longeron secondaire arrière qui sont disposés transversalement de part et d'autre du longeron central, chaque couronne comprend un moyen de fixation à un longeron secondaire.

Un tel moyen de fixation peut comprendre une chape solidaire de la couronne, cette chape coopérant avec un manchon cylindrique solidaire d'un longeron secondaire via un axe.

L'invention et ses avantages apparaîtront avec plus de détails dans le cadre de la description qui suit avec des exemples de réalisation donnés à titre illustratif en référence aux figures annexées qui représentent :
- la figure 1, une vue montrant une pale selon l'invention,
- la figure 2 une vue présentant un longeron central,
- les figures 3 à 4, des vues présentant un organe de transmission selon une première configuration,
- la figure 5, une vue présentant un organe de transmission selon une deuxième configuration,
- les figures 6 et 7, des vues présentant l'agencement d'un organe de transmission dans une ferrure,
- la figure 8, une vue présentant des couronnes selon un premier mode de réalisation,
- la figure 9, une vue présentant des couronnes selon un deuxième mode de réalisation,
- la figure 10, une vue présentant la solidarisation des couronnes à une ferrure,
- la figure 11, une vue présentant une variante de l'invention munie d'une pluralité de longerons
- les figures 12 à 13 des coupes présentant une version de l'invention mettant en oeuvre un premier méplat et un deuxième méplat, et
- la figure 14, une coupe présentant des couronnes obturant localement une rainure longitudinale d'une ferrure

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

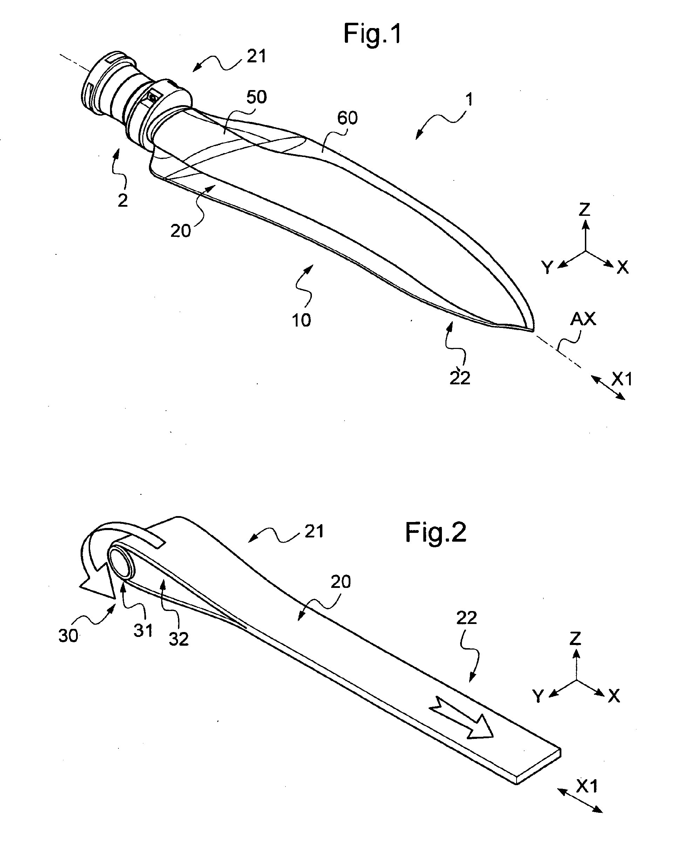

La figure 1 présente une pale 1 comportant un élément aérodynamique 10 et une ferrure 2 pour fixer l'élément aérodynamique 10 à un moyeu, un moyeu d'une hélice ou d'un rotor par exemple. La ferrure 2 peut de plus comporter un moyen de commande du pas de l'élément aérodynamique non représenté sur les figures par commodité.

L'élément aérodynamique comprend un longeron principal 20 non visible sur la figure 1 pour reprendre au moins une partie des efforts centrifuges subis par la pale 1 lors de sa rotation autour d'un axe de rotation. Ce longeron principal 20 peut être en matériaux composites, et s'étendre d'une zone d'attache 21 entourant une douille coopérant avec la ferrure 2 vers une zone distale 22.

Ce longeron principal 20 coopère de plus avec un organe de transmission des efforts de torsion en relation avec un caisson de torsion 50, le revêtement extérieur 60 de la pale 1 étant disposé autour de ce caisson de torsion 50.

Ainsi, la pale 1 inclut un moyen de transmission principal des efforts centrifuges, la douille autour de laquelle est enroulée la zone d'attache du longeron principal, et un organe de transmission principal des efforts de torsion distinct dudit moyen de transmission principal.

Les efforts centrifuges et de torsion cheminent alors principalement vers la ferrure 2 via deux cheminements distincts.

En référence à la figure 2, on fabrique un longeron principal 20 s'étendant d'une zone d'attache 21 vers une zone distale 22. La zone d'attache 21 est notamment enroulée autour d'un moyen de transmission des efforts centrifuges incluant au moins une douille 31 voire au moins une mousse de remplissage 32.

La douille 31 peut être un cylindre à sections circulaires.

Favorablement, le longeron principal 20 est un longeron en matériaux composites pourvu de fibres s'étendant de la zone d'attache 21 vers la zone distale 22 selon une direction longitudinale X1, soit selon l'envergure de la pale à réaliser pour reprendre les efforts centrifuges exercés sur cette pale.

Le longeron principal 20 peut aussi par exemple être en composite feuillé de type monolithique. D'autres matériaux sont envisageables sans sortir du cadre de l'invention.

Ainsi, on peut draper des tissus de fibres en prenant soin de les enrouler autour du moyen de transmission et notamment de la douille 31 par des méthodes usuelles, puis on pré-polymérise l'ensemble longeron-moyen de transmission.

On note que ledit ensemble peut alors être inspecté visuellement pour vérifier l'absence de défauts.

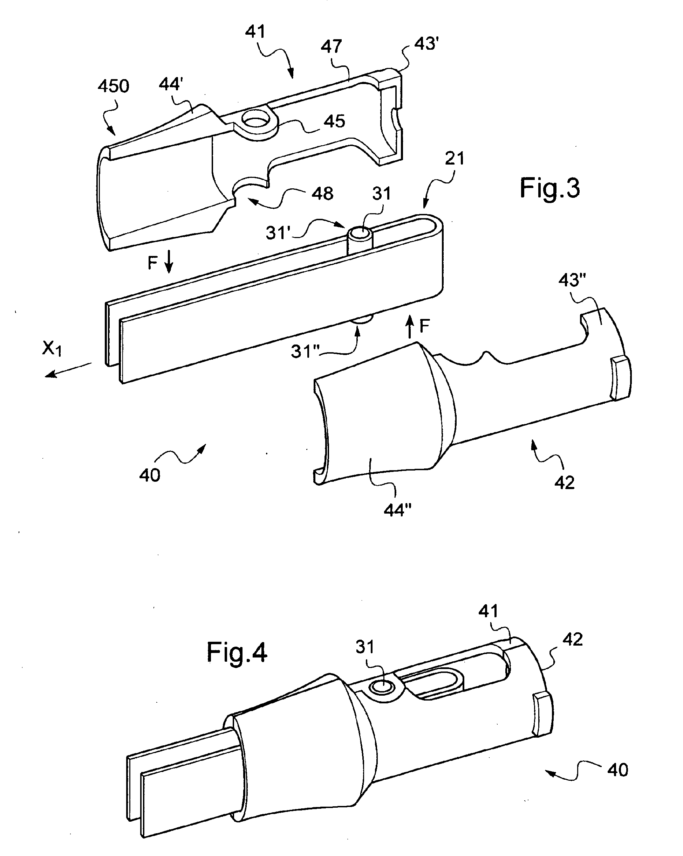

A ce stade, en référence à la figure 3, on agence alors un organe de transmission 40 des efforts de torsion sur la zone d'attache 21 du longeron principal 20.

Cet organe de transmission 40 inclut une première demi-coquille 41 et une deuxième demi-coquille 42 enserrant conjointement la zone d'attache 21. L'organe de transmission s'étend longitudinalement d'une première partie vers une deuxième partie le long d'un axe géométrique, cet axe géométrique étant éventuellement confondu avec un axe d'extension géométrique de la ferrure 2.

L'organe de transmission 40 peut inclure un moyen d'assemblage des demi-coquilles. Un tel moyen d'assemblage peut posséder au moins un pion de positionnement saillant d'une demi-coquille pour coopérer avec un orifice de positionnement de l'autre demi-coquille.

Selon un autre aspect, un organe de remplissage est éventuellement logé entre le longeron principal 20 et l'organe de transmission 40.

Chaque demi-coquille 41, 42 comprend alors d'une part une première partie 43', 43" ajourée transversalement pour permettre un accès visuel à la douille 31 voire à la zone d'attache du longeron et, d'autre part une deuxième partie 44', 44" ayant pour fonction d'être reliée à un caisson de torsion.

On note que chaque demi-coquille peut être constituée d'un unique bloc métallique par exemple, ou encore comporter une pluralité de pièces fixées les unes aux autres.

La première partie 43' de la première demi-coquille 41 et la première partie 43" de la deuxième demi-coquille 42 forment éventuellement conjointement un cylindre 46 apte à être inséré dans la ferrure 2 de fixation.

D'autres formes sont cependant envisageables.

En outre, la deuxième partie 44' de la première demi-coquille 41 et la deuxième partie 44" de la deuxième demi-coquille 42 présentées forment conjointement une surface tronconique 450 apte à être en contact avec ledit caisson de torsion 50. Par exemple, la surface tronconique 450 est obtenue à l'aide d'une génératrice appuyée sur une ellipse et présentant de fait des sections elliptiques.

Une telle surface tronconique permet de réaliser une portion tronconique d'un caisson de torsion 50, et finalement favorise l'accrochage d'un revêtement extérieur à une telle portion tronconique du caisson de torsion.

Par ailleurs, la première demi-coquille et la deuxième demi-coquille sont éventuellement symétriques pour former conjointement une coquille ayant pour fonction d'être un organe de transmission des efforts de torsion subis par la pale 1.

Toutefois, la première demi-coquille et la deuxième demi-coquille présentées peuvent être dissymétriques.

Selon la variante de la figure 3, chaque demi-coquille comporte un oeillet 45 apte à enserrer une portion extrémale 31', 31" de la douille 31 et une zone 48 conformée à la forme de l'oeillet 45 de l'autre demi-coquille.

Ainsi, on agence les demi-coquilles sur le longeron principal 20 en les déplaçant selon les flèches F représentées afin de faire translater chaque oeillet 45 sur une portion extrémale de la douille.

On note qu'au moins une demi-coquille comporte une ouverture 47.

En référence à la figure 4, à l'issue de cette opération, les demi-coquilles sont accolées et forment conjointement l'organe de transmission 40.

Cet organe de transmission possède alors au moins une lumière dans sa première partie permettant de visualiser le longeron principal 20, chaque lumière résultant desdites ouvertures 47.

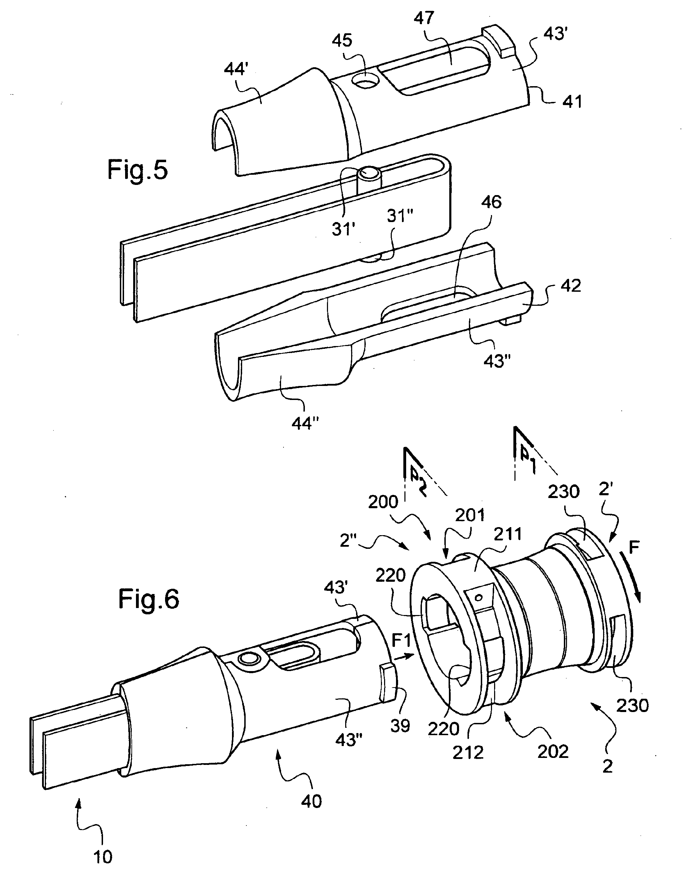

Selon la variante alternative de la figure 5, chaque demi-coquille comporte un oeillet 45 apte à enserrer une première portion extrémale 31' de ladite douille 31, chaque demi-coquille ayant un trou oblong 46 de visualisation.

Indépendamment de la variante, lorsque l'organe de transmission est en place sur la zone d'attache 21 du longeron principal 20, on fabrique un caisson de torsion 50 autour de la deuxième partie 44', 44" de chaque demi-coquille 41, 42 et de la zone distale 22 du longeron 20.

Pour finaliser l'élément aérodynamique 10 de la pale, on drape ou on bobine des fibres s'étendant selon une direction présentant un angle aigu avec ladite direction longitudinale X1, de 45 degrés par exemple.

La deuxième partie peut alors être d'un dimensionnement réduit dans la mesure où cette deuxième partie reprend principalement les efforts de torsion de la pale.

Dès lors, on fabrique un revêtement extérieur 60 autour du caisson de torsion 50 par drapage par exemple. Un moyen de remplissage est éventuellement agencé entre le caisson de torsion 50 et le revêtement extérieur 60. Ce moyen de remplissage peut servir de support pour le positionnement du revêtement.

A l'issue de cette fabrication, on polymérise l'ensemble comportant le longeron principal 20, l'organe de transmission 40, le caisson de torsion 50 et le revêtement extérieur 60 pour finaliser l'élément aérodynamique 10.

Enfin, conformément à la figure 6, on insère l'élément aérodynamique 10 selon la flèche F1 dans une ferrure 2. Plus précisément, on insère la première partie 43', 43" des demi-coquilles dans la ferrure 2.

Cette ferrure 2 s'étend longitudinalement selon un axe longitudinal d'une première extrémité 2' vers une deuxième extrémité 2". Cette deuxième extrémité 2" représente alors l'extrémité de la ferrure 2 la plus proche des deuxièmes parties 44', 44" des demi-coquilles de l'organe de transmission 40.

Cette ferrure 2 comporte favorablement un moyen d'immobilisation en translation selon ledit axe longitudinal pour immobiliser la ferrure 2 par rapport à l'organe de transmission 40.

Un tel moyen d'immobilisation en translation comprend alors au moins une rainure de guidage 220, à savoir deux rainures de guidage sur l'exemple représenté.

Chaque rainure de guidage est dimensionnée pour pouvoir guider un ergot 39 de l'organe de transmission 40 lors de l'insertion de cet organe de transmission dans la ferrure 2. Ainsi, chaque ergot est guidé par une rainure de guidage 220 lors d'une translation allant de la deuxième extrémité 2" vers la première extrémité 2'.

De plus, le moyen d'immobilisation en translation comprend une glissière en arc de cercle 230 par rainure de guidage. Chaque rainure de guidage débouche sur une glissière en arc de cercle 230 au niveau de la première extrémité 2' de la ferrure. On constate donc que les glissières en arc de cercle 230 sont contenues dans un premier plan transversal P1.

Par suite, un opérateur insère l'organe de transmission 40 dans la ferrure 2, en poussant cet organe de transmission 40 selon une direction longitudinale conformément à la flèche F1.

Lorsque chaque ergot atteint la deuxième extrémité 2' de la ferrure 2, l'opérateur fait effectuer à l'organe de transmission 40 une rotation autour de la direction longitudinale conformément à la flèche F2.

En outre, la ferrure 2 peut comprendre un moyen d'immobilisation en rotation de la ferrure 2 par rapport à l'organe de transmission 40. Un tel moyen d'immobilisation en rotation peut comprendre une clavette par exemple.

Selon un autre aspect, la ferrure 2 inclut un évidement annulaire 200, par exemple au niveau de la deuxième extrémité 2". L'évidement annulaire 200 est éventuellement situé dans un deuxième plan P2 parallèle au premier plan P1.

Cet évidement annulaire est partagé en un premier évidement 201 et un deuxième évidement 202 qui sont séparés par un séparateur dit « séparateur supérieur 211 » et un séparateur dit « séparateur inférieur 212 ».

La ferrure 2 peut de plus comporter des fenêtres 213 afin que la douille 31 débouche sur le premier évidement 201 et le deuxième évidement 202. Chaque fenêtre 213 peut inclure une section d'une rainure de guidage 220.

Le premier évidement 201 et le deuxième évidement 202 représentent des logements périphériques pouvant accueillir de manière réversible respectivement une première couronne et une deuxième couronne de transmission des efforts.

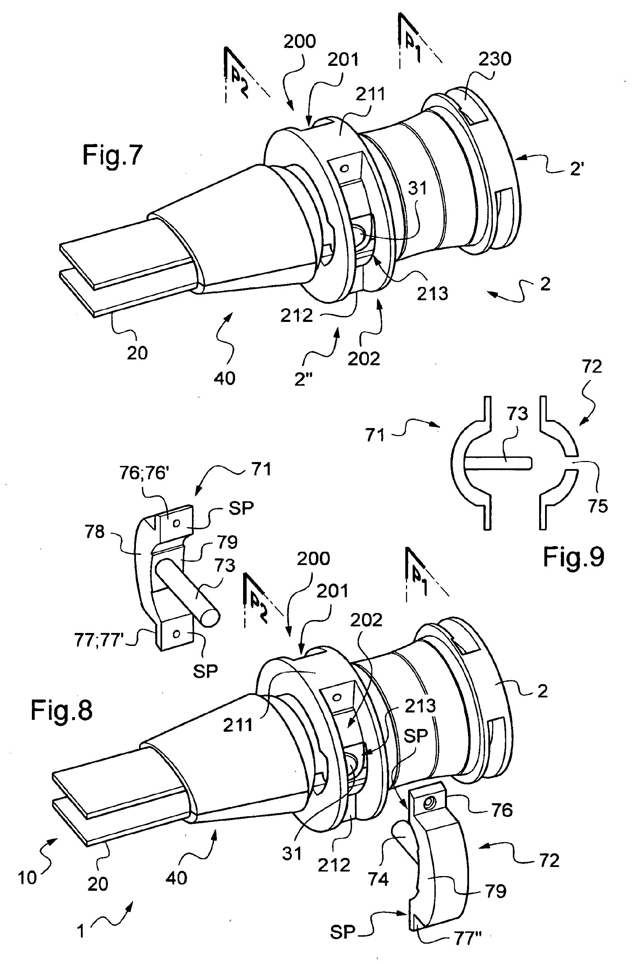

La figure 8 présente la première couronne 71 et la deuxième couronne 72.

Chaque couronne 71, 72 s'étend d'une première extrémité 76 conformée au séparateur supérieur 211 vers une deuxième extrémité 77 conformée au séparateur inférieur 212, en passant par une portion centrale en regard de la douille 31.

Par exemple, chaque extrémité est munie d'une surface plane SP en contact contre une face plane d'un séparateur. Chaque séparateur 211, 212 est ainsi coincé entre deux surfaces planes SP.

De plus, au moins une portion centrale d'une couronne porte un axe de fixation apte à traverser au moins partiellement la douille 31 et la ferrure 2.

Les efforts centrifuges exercés sur l'élément aérodynamique sont alors notamment transmis à la ferrure 2 par le biais de la douille 31 puis des couronnes 71, 72.

A cet effet, selon le premier mode de réalisation de la figure 8, chaque couronne comporte un axe de fixation.

La première couronne 71 est alors pourvue d'un premier axe de fixation 73, la deuxième couronne 72 étant pourvue d'un deuxième axe de fixation 74 apte à pénétrer dans le premier axe de fixation 73.

Selon le deuxième mode de réalisation de la figure 9, une seule couronne comporte un axe de fixation.

Dès lors, la première couronne 71 comporte un premier axe de fixation 73, la deuxième couronne 72 étant pourvue d'un perçage 75 apte à accueillir le premier axe de fixation 73.

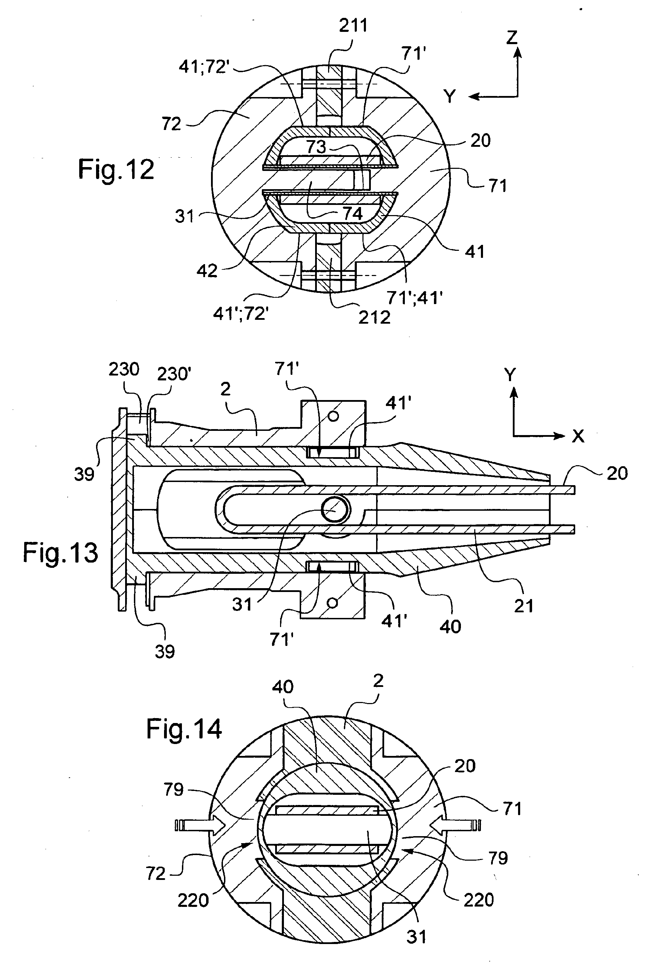

Selon un autre aspect, en référence à la figure 8 et à la figure 14, la ferrure peut comporter au moins une rainure de guidage 220.

Par suite, au moins une couronne 71, 72 inclut éventuellement une saillie 79 apte à obturer la rainure de guidage 220.

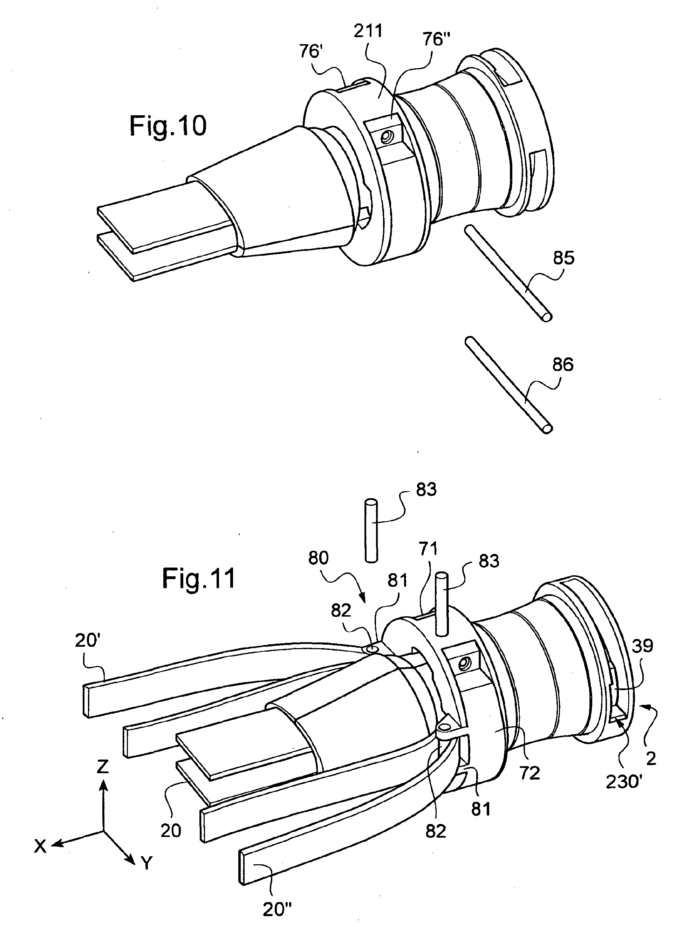

En référence à la figure 10, lorsque les première et deuxième couronnes 71, 72 sont en place dans les premier et deuxième évidements :
- on solidarise la première extrémité 76' de la première couronne 71 à la première extrémité 76" de la deuxième couronne 72 et au séparateur supérieur 211 à l'aide d'un premier axe de solidarisation 85, tel qu'un boulon coopérant avec des écrous non représentés,
- on solidarise la deuxième extrémité 77' de la première couronne 71 à la deuxième extrémité 77" de la deuxième couronne 72 et au séparateur inférieur 212 à l'aide d'un deuxième axe de solidarisation 86, tel qu'un boulon coopérant avec des écrous non représentés.

La figure 11 présente une variante de l'invention appliquée à une pale munie d'un longeron secondaire avant 20' et d'un longeron secondaire arrière 20".

Chaque couronne comprend alors un moyen de fixation 80 d'un longeron secondaire.

Par suite, chaque moyen de fixation 80 peut inclure une chape 81 fixée sur la portion centrale d'une couronne, cette chape coopérant avec un manchon cylindrique 82 d'un longeron secondaire et un axe de liaison 83.

Par ailleurs, en référence aux figures 12 et 13, la pale peut comprendre un moyen d'immobilisation en rotation optimisé.

Ce moyen d'immobilisation en rotation inclut au moins un premier méplat 41 ménagé dans la première partie de l'organe de transmission.

De plus, le moyen d'immobilisation en rotation inclut au moins un deuxième méplat 71', 72' complémentaire au premier méplat qui est ménagé sur au moins une couronne.

Par exemple, l'organe de transmission comprend un premier méplat supérieur et un premier méplat inférieur. De même, chaque couronne comporte dans sa portion centrale un deuxième méplat supérieur et un deuxième méplat inférieur.

Dès lors, l'organe de transmission est bloqué en rotation dans la ferrure.

De plus, on rappelle que cet organe de transmission a notamment pour fonction de transmettre les efforts de torsion de l'élément aérodynamique à la ferrure.

Cette réalisation permet alors à ces efforts de torsion de transiter de l'organe de transmission vers les couronnes par les méplats sans passer par les axes de fixation de ces couronnes. Au contraire, les efforts centrifuges transitent de la douille 31 vers lesdits axes de fixation.

Ainsi, les cheminements des efforts de centrifuges et des efforts de torsion sont bien ségrégués.

Par ailleurs, en référence aux figures 11 et 13, chaque glissière 230 peut comporter un logement axial 230' en regard d'un ergot 39 lorsque l'organe de transmission 40 est verrouillé à la ferrure 2.

Ainsi, en cas de rupture accidentelle en vol des axes de fixations 73, 74 voire des axes de solidarisation 85, 86, les efforts centrifuges exercés sur la pale tendent à déplacer l'organe de transmission 40 axialement par rapport à la ferrure 2.

Chaque ergot pénètre alors dans un logement axial 230'. On comprend que chaque logement axial 230' bloque la translation de l'organe de transmission 40 par rapport à la ferrure 2 selon la première direction X, et empêche un mouvement rotatif de l'organe de transmission par rapport à la ferrure 2.

Le logement axial représente alors un moyen de secours visant à solidariser l'organe de transmission 40 à la ferrure 2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) munie d'une ferrure (2) de fixation à un moyeu et d'un élément aérodynamique (10) ayant un longeron principal (20) s'étendant en envergure d'une zone d'attache (21) vers une zone distale (22), ladite zone d'attache (21) entourant une douille (31) de transmission des efforts centrifuges liée à ladite ferrure (2), ladite pale comportant un organe de transmission (40) des efforts de torsion pourvu d'une première demi-coquille (41) et d'une deuxième demi-coquille (42) enserrant conjointement ladite zone d'attache (21), chaque demi-coquille (41, 42) comprenant une première partie (43', 43") coopérant avec ladite douille (31) et une deuxième partie (44', 44") coopérant avec un caisson de torsion (50) entourant ladite zone distale (22), ladite première partie (43', 43") étant insérée dans ladite ferrure (2),
**caractérisée en ce que**, ladite ferrure (2) comprenant un évidement annulaire (200) définissant un premier évidement (201) et un deuxième évidement (202) qui sont séparés par un séparateur supérieur (211) et un séparateur inférieur (212) obturant localement l'évidement annulaire (200), la pale (1) comporte une première couronne (71) et une deuxième couronne (72) agencées de manière réversible respectivement dans le premier évidement (201) et dans le deuxième évidement (202), chaque couronne (71, 72) étant fixée au séparateur supérieur (211) et au séparateur inférieur (212), une couronne (71) comprenant un axe de fixation (73) traversant ladite douille (31) et ladite ferrure (2) en coopérant avec l'autre couronne (72).

2. Pale selon la revendication 1,
**caractérisée en ce que** ladite première couronne (71) comporte un premier axe de fixation (73), ladite deuxième couronne (72) étant pourvue d'un deuxième axe de fixation (74) apte à pénétrer dans ledit premier axe de fixation (73).

3. Pale selon la revendication 1,
**caractérisée en ce que** ladite première couronne (71) comporte un premier axe de fixation (73), ladite deuxième couronne (72) étant pourvue d'un perçage (75) apte à accueillir ledit premier axe de fixation (73).

4. Pale selon l'une quelconque des revendications 1 à 3,
**caractérisée en ce que**, ladite pale (1) comportant un longeron secondaire avant (20') et un longeron secondaire arrière (20"), chaque couronne (71, 72) comprend un moyen de fixation (80) à un longeron secondaire (20', 20").

5. Pale selon l'une quelconque des revendications 1 à 4,
**caractérisée en ce que**, chaque couronne (71) s'étendant d'une première extrémité (76) vers une deuxième extrémité (77), la pale (2) possède un premier axe de solidarisation (85) solidarisant la première extrémité (76') de la première couronne (71) à la première extrémité (76") de la deuxième couronne (72) et au séparateur supérieur (211), la pale possédant un deuxième axe de solidarisation (86) solidarisant la deuxième extrémité (77') de la première couronne (71) à la deuxième extrémité (77") de la deuxième couronne (72) et au séparateur inférieur (212).

6. Pale selon la revendication 5,
**caractérisée en ce que** chaque extrémité comprend une surface plane (SP), chaque séparateur étant enserré entre deux surfaces planes (SP).

7. Pale selon l'une quelconque des revendications 1 à 6, **caractérisée en ce que**, ladite ferrure (2) comportant au moins une rainure de guidage (220) coopérant avec un ergot (39) d'une demie-coquille, au moins une couronne (71, 72) comporte une saillie (79) apte à obturer ladite rainure de guidage (220) pour en assurer l'étanchéité.

8. Pale selon la revendication 7,
**caractérisée en ce que**, chaque rainure de guidage (220) débouche sur une glissière (230) en arc de cercle contenue dans un premier plan (P1) parallèle à un deuxième plan (P2) contenant les premier et deuxième évidements (201, 202) .

9. Pale selon l'une quelconque des revendications 1 à 8,
**caractérisée en ce que** chaque demi-coquille comporte un oeillet (45) apte à enserrer une première portion extrémale (31') de ladite douille (31), chaque demi-coquille ayant un trou oblong (46) de visualisation.

10. Pale selon l'une quelconque des revendications 1 à 8,
**caractérisée en ce que** chaque demi-coquille comporte un oeillet (45) apte à enserrer une portion extrémale (31', 31") de ladite douille et une zone (48) conformée à la forme de l'oeillet de l'autre demi-coquille.

11. Pale selon l'une quelconque des revendications 1 à 10,
**caractérisée en ce qu'**au moins une première partie (43', 43") des demi-coquilles comprenant un premier méplat (41'), au moins une couronne comporte un deuxième méplat (71', 72') complémentaire au premier méplat (41').

12. Pale selon la revendication 8,
**caractérisée en ce que** chaque glissière (230) comporte un logement axial (230') en regard d'un ergot (39) lorsque l'organe de transmission (40) est verrouillé à la ferrure (2), pour bloquer un ergot dans un logement axial en cas de translation accidentelle de l'organe de transmission par rapport à la ferrure.

## Patentansprüche

1. Rotorblatt (1) mit einem Beschlag (2) zur Befestigung an einer Nabe und einem aerodynamischen Element (10), das einen Hauptlängsträger (20) aufweist, der sich von einem Befestigungsbereich (21) bis zu einem distalen Bereich (22) erstreckt, wobei der Befestigungsbereich (21) eine Buchse (31) zur Übertragung von Zentrifugalkräften umschließt, die mit dem Beschlag (2) verbunden ist, wobei das Rotorblatt ein Organ (40) zur Übertragung von Torsionskräften aufweist, das mit einer ersten Halbschale (41) und einer zweiten Halbschale (42) versehen ist, die gemeinsam den Befestigungsbereich (21) umschließen, wobei jede Halbschale (41, 42) einen ersten Teil (43', 43") aufweist, der mit der Buchse (31) zusammenwirkt, und einen zweiten Teil (44', 44"), der mit einem Torsionskasten (50) zusammenwirkt, der den distalen Bereich (22) umschließt, wobei das erste Teil (43', 43") in den Beschlag (2) eingefügt ist,
**dadurch gekennzeichnet, dass** der Beschlag (2) eine ringförmige Ausnehmung (200) aufweist, die eine erste Ausnehmung (201) und eine zweite Ausnehmung (202) definiert, die durch ein oberes Trennelement (211) und ein unteres Trennelement (212) voneinander getrennt sind, die lokal die ringförmige Ausnehmung (200) verschließen, wobei das Rotorblatt (1) eine erste Krone (71) und eine zweite Krone (72) aufweist, die jeweils reversibel in der ersten Ausnehmung (201) und in der zweiten Ausnehmung (202) angebracht sind, wobei jede Krone (71, 72) am oberen Trennelement (211) und am unteren Trennelement (212) befestigt ist, wobei eine Krone (71) eine Befestigungsachse (73) aufweist, die die Buchse (31) und den Beschlag (2) durchquert, wobei die Krone mit der anderen Krone (72) zusammenwirkt.

2. Rotorblatt nach Anspruch 1,
**dadurch gekennzeichnet, dass** die erste Krone (71) eine erste Befestigungsachse (73) aufweist, wobei die zweite Krone (72) eine zweite Befestigungsachse (74) aufweist, die in die erste Befestigungsachse (73) eindringen kann.

3. Rotorblatt nach Anspruch 1,
**dadurch gekennzeichnet, dass** die erste Krone (71) eine erste Befestigungsachse (73) aufweist, und die zweite Krone (72) mit einer Bohrung (75) versehen ist, die die erste Befestigungsachse (73) aufnehmen kann.

4. Rotorblatt nach einem der Ansprüche 1 bis 3,
**dadurch gekennzeichnet, dass** das Rotorblatt (1) einen vorderen sekundären Längsträger (20') und einen hinteren sekundären Längsträger (20") aufweist, wobei jede Krone (71, 72) ein Mittel (80) zur Befestigung an einem sekundären Längsträger (20', 20") aufweist.

5. Rotorblatt nach einem der Ansprüche 1 bis 4,
**dadurch gekennzeichnet, dass** sich jede Krone (71) von einem ersten Ende (76) zu einem zweiten Ende (77) erstreckt, wobei das Rotorblatt (1) eine erste Befestigungsachse (85) aufweist, die das erste Ende (76') der ersten Krone (71) an dem ersten Ende (76") der zweiten Krone (72) und an dem oberen Trennelement (211) befestigt, wobei das Rotorblatt eine zweite Befestigungsachse (86) aufweist, die das zweite Ende (77') der ersten Krone (71) an dem zweiten Ende (77") der zweiten Krone (72) und an dem unteren Trennelement (212) befestigt.

6. Rotorblatt nach Anspruch 5,
**dadurch gekennzeichnet, dass** jedes Ende eine ebene Fläche (SP) aufweist, und jedes Trennelement zwischen zwei ebenen Flächen (SP) eingefügt ist.

7. Rotorblatt nach einem der Ansprüche 1 bis 6,
**dadurch gekennzeichnet, dass** der Beschlag (2) mindestens eine Führungsnut (220) aufweist, die mit einem Führungszapfen (39) einer Halbschale zusammenwirkt, wobei mindestens eine Krone (71, 72) einen Vorsprung (79) aufweist, der die Führungsnut (220) verschließen kann, um deren Dichtheit sicherzustellen.

8. Rotorblatt nach Anspruch 7,
**dadurch gekennzeichnet, dass** jede Führungsnut (220) in einer kreisbogenförmigen Gleitbahn (230) mündet, die in einer ersten Ebene (P1) liegt, die parallel zu einer zweiten Ebene (P2) verläuft, die die ersten und zweiten Ausnehmungen (201, 202) enthält.

9. Rotorblatt nach einem der Ansprüche 1 bis 8,
**dadurch gekennzeichnet, dass** jede Halbschale eine Öse (45) aufweist, in die ein erster Endabschnitt (31') der Buchse (31) einfügbar ist, wobei jede Halbschale ein Sichtlangloch (46) aufweist.

10. Rotorblatt nach einem der Ansprüche 1 bis 8,
**dadurch gekennzeichnet, dass** jede Halbschale eine Öse (45) aufweist, in die ein Endabschnitt (31', 31") der Buchse einfügbar ist, und einen Bereich (48) aufweist, der an die Form der Öse der anderen Halbschale angepasst ist.

11. Rotorblatt nach einem der Ansprüche 1 bis 10,
**dadurch gekennzeichnet, dass** mindestens ein erster Teil (43', 43") der Halbschalen eine erste Abflachung (41') aufweist, wobei mindestens eine Krone eine zweite Abflachung (71', 72') aufweist, die komplementär zu der ersten Abflachung (41') ist.

12. Rotorblatt nach Anspruch 8,
**dadurch gekennzeichnet, dass** jede Gleitbahn (230) ein Axiallager (230') gegenüber einem Führungszapfen (39) aufweist, wenn das Übertragungsorgan (40) mit dem Beschlag (2) verriegelt ist, um einen Führungszapfen in einem Axiallager zu blockieren, wenn sich das Übertragungsorgan relativ zum Beschlag unbeabsichtigt verschiebt.

## Claims

1. A blade (1) provided with a fitting (2) for fastening to a hub and with an aerodynamic element (10) having a main longitudinal member (20) extending span-wise from an attachment zone (21) towards a distal zone (22), said attachment zone (21) surrounding a bush (31) for transmitting centrifugal forces which is connected to said fitting (2), said blade comprising an element (40) for transmitting the torsional forces which is provided with a first half-shell (41) and a second half-shell (42) jointly tightly surrounding said attachment zone (21), each half-shell (41, 42) comprising a first part (43', 43") which cooperates with said bush (31) and a second part (44', 44") which cooperates with a torsion box (50) surrounding said distal zone (22), said first part (43', 43") being inserted into said fitting (2),
**characterised in that**, said fitting (2) comprising an annular cutout (200) defining a first cutout (201) and a second cutout (202) which are separated by an upper separator (211) and a lower separator (212) locally obstructing the annular cutout (200), the blade (1) comprises a first crown (71) and a second crown (72) which are arranged reversibly in the first cutout (201) and in the second cutout (202) respectively, each crown (71, 72) being fastened to the upper separator (211) and to the lower separator (212), a crown (71) comprising a fastening pin (73) which passes through said bush (31) and said fitting (2) in cooperation with the other crown (72).

2. A blade according to Claim 1, **characterised in that** said first crown (71) comprises a first fastening pin (73), said second crown (72) being provided with a second fastening pin (74) capable of penetrating into said first fastening pin (73).

3. A blade according to Claim 1, **characterised in that** said first crown (71) comprises a first fastening pin (73), said second crown (72) being provided with a hole (75) capable of receiving said first fastening pin (73).

4. A blade according to any one of Claims 1 to 3, **characterised in that**, said blade (1) comprising a front secondary longitudinal member (20') and a rear secondary longitudinal member (20"), each crown (71, 72) comprises a means (80) for fastening to a secondary longitudinal member (20', 20").

5. A blade according to any one of Claims 1 to 4, **characterised in that**, each crown (71) extending from a first end (76) towards a second end (77), the blade (2) has a first securing pin (85) for securing the first end (76') of the first crown (71) to the first end (76") of the second crown (72) and to the upper separator (211), the blade having a second securing pin (86) for securing the second end (77') of the first crown (71) to the second end (77") of the second crown (72) and to the lower separator (212).

6. A blade according to Claim 5, **characterised in that** each end comprises a planar surface (SP), each separator being held tightly between two planar surfaces (SP).

7. A blade according to any one of Claims 1 to 6, **characterised in that**, said fitting (2) comprising at least one guide groove (220) which cooperates with a lug (39) of a half-shell, at least one crown (71, 72) comprises a protrusion (79) capable of blocking said guide groove (220) to ensure tightness thereof.

8. A blade according to Claim 7, **characterised in that** each guide groove (220) opens onto a slideway (230) in the shape of an arc of a circle which is contained in a first plane (P1) parallel to a second plane (P2) containing the first and second cutouts (201, 202).

9. A blade according to any one of Claims 1 to 8, **characterised in that** each half-shell comprises an eye (45) capable of tightly surrounding a first end portion (31') of said bush (31), each half-shell having an oblong viewing hole (46).

10. A blade according to any one of Claims 1 to 8, **characterised in that** each half-shell comprises an eye (45) capable of tightly surrounding an end portion (31', 3 1 ") of said bush and a zone (48) which conforms to the shape of the eye of the other half-shell.

11. A blade according to any one of Claims 1 to 10, **characterised in that**, at least a first part (43', 43") of the half-shells comprising a first flat (41'), at least one crown comprises a second flat (71', 72') complementary to the first flat (41').

12. A blade according to Claim 8, **characterised in that** each slideway (230) comprises an axial receptacle (230') opposite a lug (39) when the transmission element (40) is locked to the fitting (2), in order to block a lug in an axial receptacle in the event of accidental translation of the transmission element relative to the fitting.
